# EUROPÄISCHE PATENTSCHRIFT

(11) **EP 4 022 192 B1**
(45) Veröffentlichungstag und Bekanntmachung des Hinweises auf die Patenterteilung: **24.01.2024**
(21) Anmeldenummer: 20732586.1
(22) Anmeldetag: 12.06.2020
(51) Int. Cl.: F16C 17/02, F16C 33/06, F16C 33/08, F16C 35/02, F16C 33/04

(54) **FOLIENLAGER**
FOIL BEARING
PALIER-FEUILLE

(30) Priorität: 28.08.2019 DE 102019212919
(43) Veröffentlichungstag der Anmeldung: 06.07.2022
(73) Patentinhaber: Robert Bosch GmbH, 70442 Stuttgart (DE)
(72) Erfinder: FOERSTER, Felix, 75433 Maulbronn (DE); WIEDMANN, Felix, 76877 Offenbach An Der Queich (DE)
(86) Internationale Anmeldenummer: PCT/EP2020/066316
(87) Internationale Veröffentlichungsnummer: WO 2021/037412

(56) Entgegenhaltungen:
- EP-A1- 0 927 831
- EP-A1- 2 314 878
- US-A1- 2015 292 552
- US-B2- 10 155 290

## Beschreibung

Die Erfindung betrifft ein Folienlager nach der Gattung des Anspruchs 1.

### Stand der Technik

Ein solches Folienlager ist durch die EP 0 927 831 A1 bekannt. Dieses Folienlager weist eine als Lagerhülse ausgebildete Lageraufnahme mit einer Lagerbohrung auf, innerhalb der wenigstens eine Folie angeordnet ist, die in der Lagerhülse fixiert ist. Die wenigstens eine Folie stützt sich in der Lagerbohrung an der Lagerhülse ab, wobei die Lagerhülse üblicherweise aus Stahl hergestellt ist, um Verschleiß im Kontaktbereich mit der Folie zu vermeiden. Die Lagerhülse kann in ein Gehäuse eines Verdichters eingebaut sein, der eine im Folienlager gelagerte Welle und wenigstens ein mit der Welle verbundenes Verdichterrad aufweisen kann. Das Gehäuse des Verdichters kann aus Aluminium oder einer Aluminiumlegierung hergestellt sein. Die Bearbeitung der aus Stahl hergestellten Lagerhülse ist aufwendig und dadurch teuer. Außerdem weist die aus Stahl hergestellte Lagerhülse ein hohes Gewicht und eine relativ schlechte Wärmeleitfähigkeit auf, so dass eine Wärmeabfuhr aus dem Folienlager erschwert ist. Aus der US 2015/0292552 A1 ist ebenfalls ein Lager mit mindestens einer Folie bekannt mit den Merkmalen des Oberbegriffs von Anspruch 1.

Die US 10 155 290 B2 beschreibt ein Verfahren zur Reparatur eines Gehäuses eines Kompressors.

### Offenbarung der Erfindung

### Vorteile der Erfindung

Das erfindungsgemäße Folienlager mit den Merkmalen des Anspruchs 1 hat den Vorteil, dass die Lageraufnahme einfach zu bearbeiten ist, ein geringes Gewicht und eine gute Wärmeleitfähigkeit aufweist, so dass das Folienlager kostengünstig hergestellt werden kann sowie dessen Gewicht gering und eine Wärmeabfuhr aus dem Folienlager verbessert ist. Durch die erfindungsgemäße Ausbildung ist ferner eine ausreichende Verschleißfestigkeit der Lageraufnahme sichergestellt, wobei die Ausbildung der Hartstoffschicht aus Titannitrit erfolgt.

In den abhängigen Ansprüchen sind vorteilhafte Ausgestaltungen und Weiterbildungen der Erfindung angegeben.

Die Ausbildung gemäß Anspruch 2 ermöglicht eine Integration der Lageraufnahme in das Gehäuse eines Verdichters, so dass keine separate Lagerhülse erforderlich ist.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist.

### Zeichnung

Ein Ausführungsbeispiel der Erfindung ist in der Zeichnung dargestellt und in der nachfolgenden Beschreibung näher erläutert. Es zeigen Figur 1 ein Folienlager in einem Querschnitt mit einer Lageraufnahme und in dieser angeordneten Folien, Figur 2 in vergrößerter Darstellung einen Ausschnitt II der Lageraufnahme und Figur 3 ausschnittsweise ein Gehäuse eine Verdichters mit darin angeordnetem Folienlager.

### Beschreibung des Ausführungsbeispiels

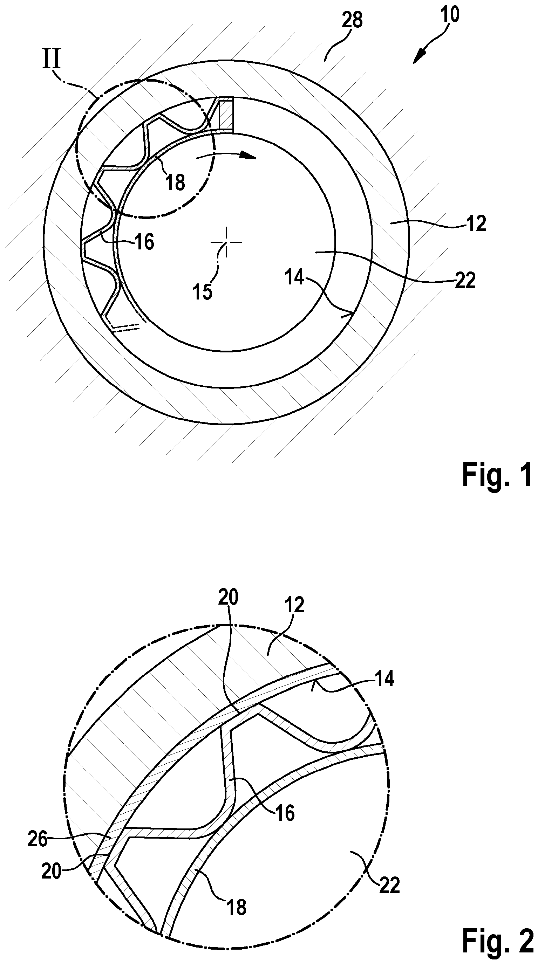

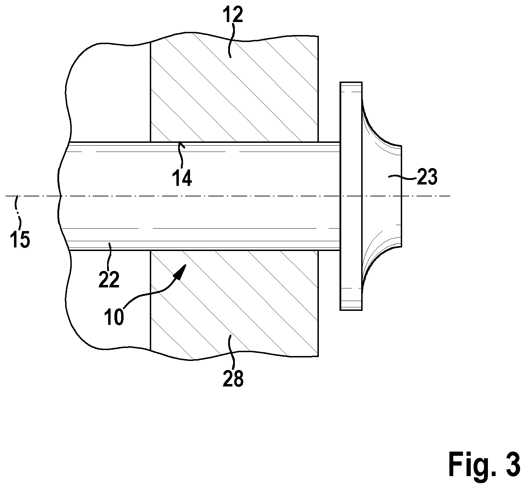

In den Figuren 1 bis 3 ist ein Folienlager 10 mit einer Lageraufnahme 12 dargestellt, die als Lagerhülse ausgebildet sein kann. Die Lagerhülse 12 hat im Wesentlichen die Gestalt eines geraden, hohlen Kreiszylinders mit einer Lagerbohrung 14 und einer Längsachse 15. Im Inneren der Lagerbohrung 14 sind beispielsweise zwei Folien 16, 18 des Folienlagers 10 angeordnet. Die Folie 16 wird auch als Beam, Bump oder Unterfolie bezeichnet und ist zwischen der Lagerbohrung 14 und der Folie 18 angeordnet, die auch als Topfolie oder Oberfolie bezeichnet wird. Die Folie 16 ist beispielsweise als Federfolie ausgebildet und liegt zumindest bereichsweise in Kontaktbereichen 20 an der Lagerbohrung 14 an. Die Folien 16, 18 sind in Figur 1 nur in einem Teil ihres Umfangs dargestellt und erstrecken sich über den gesamten Umfang der Lagerbohrung 14. Das Folienlager 10 dient zur drehbaren Lagerung einer Welle 22, die an der Folie 18 anliegt. Bei Rotation der Welle 22 bildet sich zwischen der Welle 22 und der Folie 18 ein Gaspolster.

Die Folien 16, 18 sind als Metallfolien ausgebildet und können durch Stanzen hergestellt werden. Zwischen den beiden Folien 16, 18 kann noch eine dritte Folie angeordnet sein. Die Folien 16, 18 sind in nicht näher dargestellter Weise in der Lagerbohrung 14 der Lageraufnahme 12 fixiert. Beispielsweise können die Folien 16, 18 mit ihren in Umfangsrichtung weisenden Rändern unter T-förmigen Haltern oder in Schlitzen oder Öffnungen im Innenmantel der Lagerbohrung 14 eingefügt sein.

Die Lageraufnahme 12 ist aus Aluminium oder einer Aluminiumlegierung hergestellt, wobei die Lagerbohrung 14 in einem spanabhebenden Verfahren oder einem anderen Verfahren wie beispielsweise Erodieren bearbeitet wird um eine ausreichende Form- und Maßgenauigkeit zu erreichen. Um eine ausreichende Verschleißfestigkeit der Lageraufnahme 12 sicherzustellen ist die Oberfläche der Lagerbohrung 14 mit einer Hartstoffschicht 26 versehen.

Die Hartstoffschicht 26 kann grundsätzlich durch ein Anodisieren der Oberfläche der Lagerbohrung 14 gebildet werden. Hierbei handelt es sich um ein elektrolytisches Verfahren, bei dem sich aus dem Aluminium bzw. der Aluminiumlegierung eine Oxidschicht bildet, die eine höhere Verschleißfestigkeit aufweist als das Aluminium oder die Aluminiumlegierung. In erfindungsgemäßer Weise ist hier hingegen die Hartstoffschicht 26 durch Aufbringen einer Beschichtung aus Titannitrit TiN auf die Oberfläche der Lagerbohrung 14 gebildet.

Vorzugsweise erfolgt nach dem Aufbringen der Hartstoffschicht 26 nochmals eine Bearbeitung der Lagerbohrung 14 um auch mit der Hartstoffschicht 26 die erforderliche Form- und Maßgenauigkeit zu erreichen.

Die Welle, die im Folienlager 10 drehbar gelagert ist, gehört zum Beispiel zu einem (ebenfalls nicht dargestellten) Rotor einer Strömungsmaschine. Die Strömungsmaschine ist zum Beispiel Teil einer Luftversorgungseinheit in einem Brennstoffzellensystem. In dem Brennstoffzellensystem ist die Strömungsmaschine zum Beispiel als Verdichter ausgeführt. Der Verdichter umfasst ein Verdichterrad 23, das vorteilhafter Bestandteil des Rotors ist.

Die Lageraufnahme 12 kann wie vorstehend angegeben ein separates Bauteil in Form einer Lagerhülse sein, die in ein Gehäuseteil des Verdichters eingesetzt ist. Alternativ kann die Lageraufnahme 12 auch Teil eines Gehäuseteils 28 des Verdichters sein, also einstückig mit dem Gehäuseteil 28 ausgebildet sein. Im Gehäuseteil 24 ist dabei die Lagerbohrung 14 eingebracht, die wie vorstehend erläutert die Hartstoffschicht 26 aufweist.

Durch die Lageraufnahme 12 ist aufgrund der guten Wärmeleitfähigkeit des Aluminiums oder der Aluminiumlegierung eine wirkungsvolle Ableitung von im Folienlager 10 entstehender Wärme ermöglicht.

## Patentansprüche

1. Folienlager (10) mit mindestens einer Folie (16, 18), die innerhalb einer Lagerbohrung (14) einer Lageraufnahme (14) angeordnet und in dieser fixiert ist, wobei die Lageraufnahme (12) aus Aluminium oder einer Aluminiumlegierung hergestellt ist, **dadurch gekennzeichnet, dass** die Oberfläche der Lagerbohrung (14) der Lageraufnahme (12) zumindest in einem Kontaktbereich (20) mit der wenigstens einen Folie (16, 18) mit einer Hartstoffschicht (26) versehen ist, wobei die Hartstoffschicht (26) aus Titannitrit gebildet ist.

2. Folienlager nach Anspruch 1, **dadurch gekennzeichnet, dass** die Lageraufnahme (12) Teil eines Gehäuseteils (28) eines Verdichters ist.

3. Folienlager nach einem der vorhergehenden Ansprüche, **dadurch gekennzeichnet, dass** die Lageraufnahme (12) als Lagerhülse ausgebildet ist.

4. Folienlager nach einem der vorstehenden Ansprüche, **dadurch gekennzeichnet, dass** das Folienlager (10) wenigstens eine Oberfolie (18) und eine Unterfolie (16) aufweist, die zwischen der Oberfolie (18) und der Lagerbohrung (14) angeordnet ist und dass zumindest die Unterfolie (16) an der Lagerbohrung (14) anliegt.

## Claims

1. Foil bearing (10) having at least one foil (16, 18), which is arranged within a bearing bore (14) of a bearing receptacle (14) and fixed therein, the bearing receptacle (12) being produced from aluminum or an aluminum alloy, **characterized in that** the surface of the bearing bore (14) of the bearing receptacle (12) is provided with a hard-material layer (26) at least in a region (20) of contact with the at least one foil (16, 18), the hard-material layer (26) being formed from titanium nitrite.

2. Foil bearing according to Claim 1, **characterized in that** the bearing receptacle (12) is part of a housing part (28) of a compressor.

3. Foil bearing according to one of the preceding claims, **characterized in that** the bearing receptacle (12) is in the form of a bearing sleeve.

4. Foil bearing according to one of the preceding claims, **characterized in that** the foil bearing (10) comprises at least one top foil (18) and one bottom foil (16), which is arranged between the top foil (18) and the bearing bore (14), and **in that** at least the bottom foil (16) bears against the bearing bore (14).

## Revendications

1. Palier à feuilles (10) comportant au moins une feuille (16, 18) qui est disposée à l'intérieur d'un alésage de palier (14) d'un logement de palier (14) et fixée dans celui-ci, le logement de palier (12) étant fabriqué à partir d'aluminium ou d'un alliage d'aluminium, **caractérisé en ce que** la surface de l'alésage de palier (14) du logement de palier (12) est dotée d'une couche de matière dure (26) au moins dans une région de contact (20) avec l'au moins une feuille (16, 18), la couche de matière dure (26) étant formée à partir de nitrure de titane.

2. Palier à feuilles selon la revendication 1, **caractérisé en ce que** le logement de palier (12) fait partie d'une partie de carter (28) d'un compresseur.

3. Palier à feuilles selon l'une des revendications précédentes, **caractérisé en ce que** le logement de palier (12) est réalisé sous forme de douille de palier.

4. Palier à feuilles selon l'une des revendications précédentes, **caractérisé en ce que** le palier à feuilles (10) présente au moins une feuille supérieure (18) et une feuille inférieure (16) qui est disposée entre la feuille supérieure (18) et l'alésage de palier (14) et **en ce qu'**au moins la feuille inférieure (16) s'appuie contre l'alésage de palier (14).
